# EUROPEAN PATENT SPECIFICATION

(11) **EP 3 360 211 B1**
(45) Date of publication and mention of the grant of the patent: **07.06.2023**
(21) Application number: 16784993.4
(22) Date of filing: 05.10.2016
(51) Int. Cl.: H02G 9/10, H02G 3/18, B60L 53/31

(54) **UNDERGROUND POWER SUPPLY SYSTEM, IN PARTICULAR AN UNDERGROUND VEHICLE CHARGING STATION AND A METHOD TO CHARGE AN ELECTRIC VEHICLE**
UNTERIRDISCHES STROMVERSORGUNGSSYSTEM, INSBESONDERE UNTERIRDISCHE FAHRZEUGLADESTATION UND VERFAHREN ZUM LADEN EINES ELEKTROFAHRZEUGS
SYSTÈME D'ALIMENTATION ÉLECTRIQUE SOUTERRAIN, EN PARTICULIER BORNE DE RECHARGE DE VÉHICULE SOUTERRAINE ET PROCÉDÉ DE CHARGE D'UN VÉHICULE ÉLECTRIQUE

(30) Priority: 05.10.2015 NL 2015564
(43) Date of publication of application: 15.08.2018
(73) Proprietor: Brainwave B.V., 4691 SE Tholen (NL)
(72) Inventor: VAN BEELEN, Aarnoud, 4698 BP Oud-Vossemeer (NL); VAN WEEZEL, Aard, 5421 AG Gemert (NL)
(74) Representative: EP&C
(86) International application number: PCT/NL2016/050689
(87) International publication number: WO 2017/061863

(56) References cited:
- EP-A1- 2 400 614
- WO-A1-03/061053
- WO-A2-2012/104231
- GB-A- 1 017 548
- GB-A- 2 236 913
- NL-C2- 1 007 973
- US-A- 5 342 993
- US-A- 5 755 582
- US-A1- 2010 013 434

## Description

The present invention relates to an underground power supply system, in particular an underground vehicle charging station, according to the preamble of independent claim 1. The invention also relates to a method to supply an electric current to charge an electric vehicle with the use of an underground power supply system according to the preamble of independent claim 10. Such an underground vehicle charging station is known, for example, from European Patent Application EP2640597 A2.

The use of vehicles that contain an electric power unit becomes more popular lately. These vehicles, also known as electric vehicles EV and plug-in hybrid electric vehicles PHEV, rely on the usage of an electric motor as a means to transfer energy. Part of the required electrical energy is obtained by means of regenerative braking; other parts are obtained from the electrical grid. To charge the batteries in these vehicles, an interface is needed to present the electricity to the vehicle. Until now, most of these interfaces have arrived in the form of a charging station on street level, appearing for example like a pole in the sidewalk.

Several underground vehicle charging stations are also known, such as for example in WO2012104231 A2, in which the charging station is positioned on a platform that is configured to move vertically in order to sink the charging station below the street level when not in use. A benefit of this submerged charging station is that the street scene is no longer exposed to these charging stations when not in use, and they can no longer be subject of vandalism and are exposed less to the outdoor climate.

A drawback of the known charging station is the complexity of the system. A large casing has to be submerged into the ground to house the charging station and all appliances. The lifting system, to raise the interface of the charging station to street level is also complex and therefore expensive. The underground casing is prone to flooding with water, for example by a high ground water level or by excessive rain. The water in the casing is likely to cause short circuiting in the charging station.

United States patent application US 5 342 993 A discloses an electric outlet apparatus for outdoor use, including a housing having a top portion and an opening in the top portion, a receptacle panel structure having a first face and including a receptacle circuit, a receptacle mounted in the first face of the receptacle panel structure, a mechanism for movably connecting the panel to the housing so that the panel can move between a position, wherein the panel first face is directed essentially downward inside the housing and an open position wherein the panel extends out of the top opening, and a substantially air tight compartment defined below the first face of the receptacle panel structure for preventing any water collected within the housing from rising to meet the receptacle panel structure.

Dutch patent NL 1 007 973 C2 discloses a power station for placement on (semi)public ground to supply a private subscriber or a company, which station has a pit housing for sinking into the ground with a section closable by a cover and with a number of voltage tapping sockets and a section closable by a second cover for accommodating a transfer box for connection to an underground cable.

European patent application EP 2 400 614 A1 discloses a lifting system for a distributor of an under-floor system, which system has a distributor moving up or down and pushing a plunger, which is arranged at a lower side of a shaft cover. The distributor is detached from the plunger and freely accessible when lower edge of the plunger reaches an upper edge of a shaft, through a telescopic function of the shaft cover with the plunger driven upwards. The shaft is made of plastic or stainless steel. The cover is linearly driven from the shaft, where the system moves in and out by spindle or hydraulic pressure.

Finally, United States patent application US 5 755 582 A discloses a retractable door stop security device or utility box, which is mounted in a floor or other flat mounting surface and which includes a housing with a flange plate, which is mounted in an opening in the mounting surface. A retractable member is provided within the housing which alternates between a raise position and a lower position. By pressing downwardly on the top of the retractable member, a latching mechanism is released, allowing the spring biased retractable member to move to the raised position. The retractable member is lowered by applying a force sufficient to counteract the action of the spring and move the member into the housing, whereupon the latch mechanism re-engages the retractable member to retain it in the lower position.

It is an object of the invention to provide an improved underground power supply system in which one or more of the above drawbacks are eliminated or at least partly reduced.

The present invention provides an underground power supply system as claimed in claim 1.

In an embodiment, the underground power supply system is an underground vehicle charging station that is used to provide an electric current to an electric vehicle in order to charge the batteries of the electric vehicle.

The underground power supply system comprises a casing comprising an opening at the upper side, where a cover is attached to the casing in such a way that when the cover is in the closed position, the opening in the casing is closed at least partly. An airtight compartment is situated at the inner surface of the cover that faces the interior of the casing when the cover is in closed position. This airtight compartment comprises one or more side walls and has an opening at the side of the airtight compartment opposite of the inner surface and is facing an interior of the casing.

A power socket unit is arranged at least partly in this airtight compartment, such that the power socket unit is accessible through the opening in the airtight compartment. An actuating element is arranged in the underground power supply system, configured to move the cover from a closed position to an open position.

An advantage of the system according to the invention is the presence of the airtight compartment in the interior of the cover. This airtight compartment functions like a diving-bell and is capable, when the opening is facing downward, to hold a volume of air inside. When the casing happens to flood as a result of excessive rain or a high ground water level, the volume of air inside the airtight compartment will prevent water from entering therein. The airtight compartment therefore needs to be airtight to hold the air inside. The power socket unit is situated at least partly in the interior of the airtight compartment. It will, as a result of the trapped volume of air, be surrounded by air alone and short circuiting, as a result of water entering the power socket unit, will be prevented.

Preferably, the walls of the airtight compartment do not comprise any holes, which define a passage between an interior and an exterior of the compartment. In particular, the compartment does not comprise any holes through its side walls and top wall to provide an opening to receive cable or the like that run from an interior to the exterior of the compartment.

A cable may run from the power socket unit towards the control unit, to supply the power socket unit with an electric current. When an electric vehicle is charged, a plug of a charging cable is connected to the power socket unit. The other end of the charging cable is coupled to the vehicle. After charging the plug may be disconnected from the power socket unit.

The airtight compartment is designed so that both the power socket unit and the plug are captured in the volume of air, leaving only the cables to be exposed to the water, if present. Since cables are designed to be used in wet environments, the risk of having short circuiting in the power socket unit as a result of water entering is eliminated.

In an embodiment, the cable may enter the interior of the airtight compartment through a hole in a side wall. However, in another embodiment, in which the airtight compartment is free of any holes in the walls, the cable enters the airtight compartment through the opening of the airtight compartment and runs, at least partially, along an inner surface of at least one of the side walls, facing the interior of the airtight compartment and along an outer surface of the at least one of the side walls, at the exterior of the compartment.

It has been found that the cables, which are used to electrically connect the power socket unit and the control unit, may be permeable for air. In particular, cable jackets may be porous and provide migration paths for gasses to permeate through the cable. Air, that is supposed to be retained within the airtight compartment of the system, could, as a result, leak out of the compartment, allowing water to enter the compartment.

A connection piece may therefore be provided through which the cables enter the interior of the airtight compartment. The connection piece may be arranged at a side wall of the airtight compartment, adjacent the opening. The connection piece is non-permeable for air, such that the airtightness of the airtight compartment is maintained.

During manufacturing of the connection piece, the cable jacket is, at least partially at the section of the cable which is supposed to be within the connection piece, removed, such that wires of the cable become exposed. The wires are generally made of a metal, preferably copper, and are not permeable for air. The wires are then guided through a mould, after which resin or molten plastic is casted into the mould. The resin or plastic thereby tightly enclose the wires, such that the wires cannot contact each other within the connection piece, to prevent short-circuiting, and that no air can permeate through the connection piece, along the wires.

In an embodiment, the connection piece is configured to be releasably mounted to one of the side walls of the airtight compartment. The connection piece may, for example, be mounted to the side wall by means of a snap-fit mount. This snap-fit mount allows for easy installation and removal of the connection piece, without the need for tools to be used.

In this embodiment, preferably, connectors may be provided with which the parts of the cable inside the connection piece may be uncoupled from the parts of the cable that are arranged outside the connection piece. The connection piece can thereby be removed as a whole, without having to remove the entire cable as well. In case one connection piece then turns out to leak, for example, it may be replaced with another connection piece swiftly and relatively cheap.

In an embodiment, multiple cables may be bonded together to form a wiring harness, which is at least partially arranged in the connection piece to enter the interior of the airtight compartment, without leaking air. The multiple cables are preferably arranged in a row parallel to each other.

The opening in the casing is covered by the cover at least partly. When the cover covers the opening only partly, water is not fully prevented from entering the casing. If the casing happens to flood with water, it is desirable to remove the water from the interior of the casing. The casing could therefore comprise one or more holes that penetrate its walls and form a connection between the interior and the exterior of the casing and thereby allow excessive water to be drained from the casing. A pump can be arranged as well to remove excessive water from the interior of the casing to the exterior. The casing is equipped with a sensor that measures the water level in the casing and communicates this signal back to the control unit of the underground power supply system.

In the known underground power supply system, an actuator is used to lift the power socket unit from a position in the casing to a position on street level, where the power socket unit was accessible to the user. An example of this complex and expensive setup is shown in Figures 1A and 1B of WO2012104231 A2. The present invention also comprises an actuation element to make the power socket unit accessible to the user, but instead of lifting the power socket unit above street level, the cover is moved between an open and closed position.

The present underground power supply system comprises a cover, rotatable with respect to the casing around an axis along a side of the opening. In this embodiment, the airtight compartment will rotate along with the cover, by which the opening of the airtight compartment is presented to the user such that the power socket unit is accessible for the user. Especially, the rotational opening of the cover is a less complex solution to the found drawbacks of the complex lifting system of the power socket unit from the ground as in WO2012104231 A2.

The power socket unit comprises one or more power sockets. Two or more power sockets allow simultaneous connection of two or more plugs in the power socket unit for simultaneous charging of two or more vehicles.

In an embodiment, the power socket unit is arranged on a tilting mechanism mounted in the airtight compartment to allow the power socket unit to be moved between the charging position, in which the power socket unit at least partly extends out of the airtight compartment, and the retracted position, in which the power socket unit is arranged in the airtight compartment.

An advantage of this movement by the tilting mechanism is the increased accessibility for the user to the power socket unit. When the cover is opened, the power socket unit is partly moved out of the airtight compartment into a charging position to allow better access to the power socket unit for the user. When the cover is closed, the power socket unit will be arranged in a retracted position. To hold the power socket unit in the retracted position a rest may be provided. The movement of the power socket unit is enabled by a tilting mechanism, which is configured to allow rotation of the power socket unit with respect to the airtight compartment. The rotation of this tilting mechanism will be coupled to the opening and closing of the cover and no actuator mechanism is required to individually rotate the tilting mechanism. The rotation is preferably caused by gravitation, but also other devices such as springs and magnets may be provided to cause this rotation of the power socket unit.

In the present power supply system, the actuator mechanism to move the cover to the open position is a spring element. In this embodiment, the spring element is mounted on the cover and the casing. When the cover is in closed position, the spring is loaded in tension. The cover will, as a result of this pre-tension, move to the open position. When the cover is in the open position, the tensile load in the spring would have decreased to an extent that the cover will remain in the open position. For example, a coiled or spiral spring can be provided, combined with a gas damper for damping purposes. The coiled spring will automatically move the cover to the open position without external actuation, while the damper decreases the speed at which the cover is moved to the open position.

To prevent the cover from moving to the open position at any time, a locking mechanism is provided. This locking mechanism is able to lock the cover with respect to a locking bracket in the casing, keeping the cover in the closed position, and is able to unlock the cover, allowing the spring element to move the cover to the open position. This locking mechanism may prevent the underground power supply system, and especially the power socket unit, to be accessible for the public. Only authorized users will be able to unlock the cover, which will decrease the risk of vandalism or theft of electricity.

In an embodiment, the locking mechanism is configured to unlock the cover upon receipt of a release signal from the control unit, such that the actuation element will automatically move the cover to the opened position. In order for only authorized users to use the underground power supply system, the locking mechanism must be able to be opened by a release signal from those users.

In an embodiment, the underground power supply system comprises a communication device to communicate with an external communication device, for example a mobile telephone, remote control unit, card, etc.

The communication device may be configured for direct communication through for example Bluetooth or Near Field Communication (NFC) in for example the cover, while in another embodiment, a mobile device, for example a mobile telephone with an app installed, can communicate indirectly with a communication unit through the internet. The communication unit is able to send this signal to the control unit, which is able to verify the release signal and capable of sending a signal to the locking mechanism to unlock the cover. Using this remote way of opening the cover, the system is able to know which user uses the system.

It is remarked that the system may comprise mechanical locking/unlocking with a dedicated tool. This dedicated tool can be used to unlock the cover, when for example no electricity is provided to the underground power supply system or when there is a malfunctioning of the system, for example by the communication unit.

In an embodiment, the underground power supply system is an underground vehicle charging station, comprising a control unit configured to monitor and control the electric current towards the power socket unit, wherein the control unit is preferably configured to only charge the vehicle when the cover is in the closed position.

The airtight compartment, in which the power socket unit houses, is designed in a way that the cover can be closed when the charging cable is installed in the power socket unit. This is an advantage over the known system, since in that system, the power socket unit had to remain on street level during charging. The advantage of having the power socket unit submerged in the casing during charging is that the cable cannot be removed from the power socket unit during charging of the vehicle without the user's intention, since the cover will be locked. The power socket unit will also harm the street scene to a lower extent, since only the charging cable will be visible and not the entire power socket unit.

The cover closes the opening in the casing at least partly, so that in a possible embodiment, the cable towards the vehicle can run through a part of the opening not covered by the cover in the closed position from the power socket unit towards the vehicle.

A second sensor can be arranged in the casing, with which can be validated whether the cover is in the open or in the closed position. This second sensor is able to communicate with the control unit in order to start charging of the vehicle when the cover is in the closed position. It may also possible that the user first has to confirm the beginning of the charging process on a remote device.

In an embodiment, the control unit is configured to send a signal to the locking mechanism to lock the cover when the cover is moved into the closed position.

In an embodiment, the casing is composed of two or more separate casing compartments. For example, the underground power supply system may comprise one casing compartment to receive the airtight compartment in the closed position and another casing compartment to receive the control unit and communication unit. Only one casing compartment will comprise the opening that provides access to the interior of the casing compartment. A cover may be arranged at least partly over this opening and the power socket unit is attached to this cover.

The casing compartment is accessible when the user intends to charge the vehicle. However, the control unit for example, does not necessarily need to be accessible for the user. When the casing is separated into multiple casing compartments, this control unit and possible other components of the system that do not need to be used directly by the user, such as the communication unit, can be placed into a separate casing compartment. A second locking mechanism can be present to allow only access to those components for authorized people, such as mechanics for servicing and repair. A first advantage is that all components placed in this second casing compartment, are less prone to, for example, sabotage. Since these components generally not need to be accessed as often as the power socket unit, another advantage is that a second cover, which will close this casing compartment, can be made airtight, protecting the interior.

In an embodiment, the system comprises a second airtight compartment, which is configured to be arranged at a bottom of the casing. The second airtight compartment comprises, just like the first airtight compartment, side walls and a top wall, which together define an interior of the second airtight compartment. At least the side walls and the top wall of the second airtight compartment are non-permeable for air and are thus airtight.

The interior can be accessed through an opening that is defined by the side walls as well and is arranged opposite to the top wall. The second airtight compartment is configured to be mounted on a bottom of the casing, such that its opening is closed by the bottom of the casing and that the top wall is set away from the bottom.

Preferably, the side walls and the top wall of the second airtight compartment form an integral part in order to achieve optimal airtightness of the second airtight compartment.

The second airtight compartment is configured to keep a volume of air in its interior to prevent flooding of the interior with water.

The control unit is arranged in the interior of the second airtight compartment and is thereby prevented from coming into contact with water. The control unit may be mounted to the top wall of the second airtight compartment, thereby facing the opening.

In an embodiment, the second airtight compartment is formed as an exchangeable module. This allows for easy repair and/or replacement of the control unit and other electronic components arranged in the second airtight compartment. In order to make the second airtight compartment exchangeable a releasable snap-fit connection device may be provided to mount the second airtight compartment on for example the bottom wall of the casing of the system. Any other device to releasably mount the second airtight compartment in the system may also be used. A lock device may be provided to lock the second airtight compartment in the mounted position in order to prevent that unauthorized persons take the second air tight compartment out of the system.

The control unit may comprise at least one connector in which a plug of a cable can be releasably plugged to obtain an electrical connection between the control unit and the cable. An advantage of this releasable connection is that, in case the control unit may break down, the second airtight compartment can be removed, the at least one connector can be released and the control unit can be removed from the compartment. This allows for swift and easy exchange of control units in case of a breakdown.

The invention further provides a method to provide an electric current to charge an electric vehicle, using an underground power supply system, in particular an underground vehicle charging station, as described any of the claims 1-9, comprising the steps of:
sending a loading request to the underground power supply system,
moving, by the actuation element, the cover to the opened position and exposing the power socket unit from an underground casing to the user,
attaching a charging cable to the power socket unit and the vehicle,
charging the vehicle by delivering an electric current to the power socket unit, and
removing the charging cable from the power socket unit and the vehicle when the underground power supply system has finished charging.

In an embodiment of the method, during the step of moving the cover to the opened position, the power socket unit moves from the retracted position, in which the power socket unit is arranged in the airtight compartment to the charging position, in which the power socket unit at least partly extends out of the airtight compartment, thereby allowing better access to the power socket unit by the user. The movement of the power socket unit at least partly out of the airtight compartment increases the accessibility of the power socket unit to the user.

In an embodiment of the method, an active request may be sent by the user to the underground power supply system to allow the system to start supplying electricity to the power socket unit. This request may function as a confirmation that all appliances, like the plug for example, have been installed properly.

In an embodiment, the method comprises the step of sending a request, by the user, to the underground power supply system to unlock the cover in order to allow opening of the cover and removal of the charging cable from the power socket unit.

In an embodiment, the method comprises, after the step of removing the charging cable from the power socket unit, moving, by the user, the cover into the closed position, wherein closure of the cover is preferably confirmed by a control unit.

According to the present invention, the control unit prevents the power socket unit to be moved between the retracted position and the accessible position, when a water level sensor in the casing measures a water level in the casing that exceeds a predetermined maximum level.

The water level in the casing can be measured by a sensor. When the water level in the casing is too high, above a certain predetermined maximum value, the control unit can decide not to unlock the cover when the user sends a signal to unlock the cover. The airtight compartment which houses the power socket unit and a plug from the charging cable in a volume of air, can pick up water when the cover is moved to the open position when the water level is too high, and therefore cause short circuiting in the system after all.

When the control unit prevents the locking mechanism from unlocking the cover, the water has time to flow out of the casing and/or a pump can be activated to remove water from the casing, after which the cover can be moved to the open position after all.

An embodiment of the invention will now be described, by way of example only, with reference to the accompanying schematic drawings in which:
Figure 1 shows a plan view of the underground power supply system with the cover in the opened position;
Figure 2 shows a plan view of the underground power supply system with the cover in the closed position;
Figure 3 shows a section view of the underground power supply system with the cover in the closed position;
Figure 4 shows a section view of the underground power supply system with the cover in the open position;
Figure 5 shows a section view of an alternative embodiment of the underground power supply system; and
Figure 6 shows a section view of the second airtight compartment module.

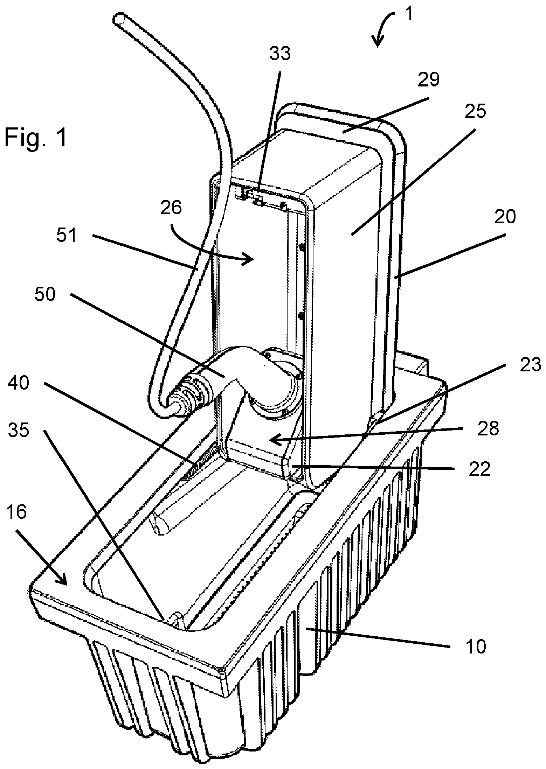

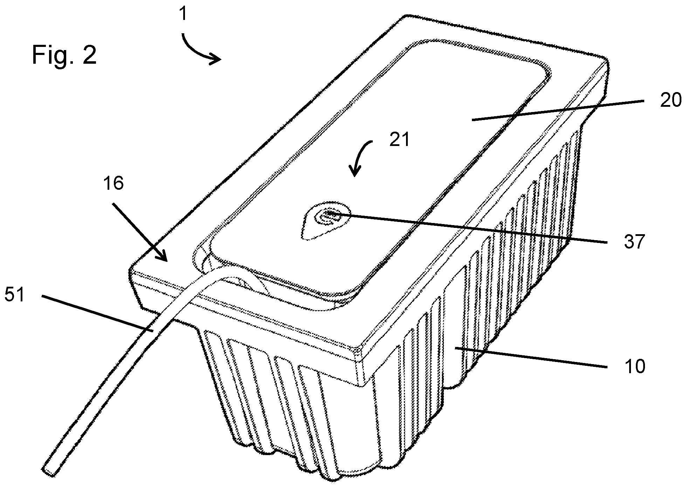

Figures 1 and 2 show an underground power supply system generally denoted by the reference numeral 1.

The underground power supply system 1 is configured to charge an electric vehicle, and is configured to be arranged underground when in use. Therefore, the underground power supply system is configured to be arranged below street level, when a plug 50 has been installed in a power socket and charging of the vehicle has been started.

The underground power supply system 1 comprises an underground casing 10 and a cover 20. The cover 20 is rotatable mounted in the underground casing 10 and movable between an opened position as shown in Figure 1, and a closed position, as shown in Figure 2.

The underground casing 10 is configured to be installed underground at a depth that a top wall 16 of the underground casing 10 is at same level as the surrounding surface, such as the surrounding pavement. In an embodiment, the cover 20 may be designed such that the top wall 16 of the casing 10 will support the cover 20 on the upper wall 29.

The top side of the cover 20 may comprise a recess to receive a structure similar to the surrounding structure, for instance pavements stones corresponding to the stones of the surrounding pavement.

The cover 20 is rotatable with respect to the underground casing 10 through a hinge 23, which is provided between the underground casing 10 and the cover 20. The cover 20 may be rotated around the hinge 23 when it is moved between the open and the closed position.

The underground casing 10 comprises at its upper side an opening 13 that provides access to an interior of the underground casing 10. In the closed position, the cover 20 extends in a substantially horizontal position to cover substantially the whole opening 13. In the opened position of the cover 20, the interior of the underground casing 10 is accessible for the user.

A spring 40 is provided to move the cover 20 from the closed position to the opened position. In the shown embodiment, a gas damper 41 is provided between the underground casing 10 and the cover 20 for damping purposes.

One end of the spring 40 is mounted on the interior of the underground casing 10 and the other end is attached to the cover 20. When the cover 20 is in the closed position, the spring 40 will be elongated and will bias the cover 20 to the open position. A lower remaining amount of pre-stress will be present in the spring 40 when the cover 20 is in the open position, which will keep the cover in the opened position. The force provided by the spring 40 is sufficient to automatically move the cover from the closed position to the opened position.

In a further embodiment, other devices may be comprised to keep the cover 20 in the opened position. A permanent magnet, for example, may be used to apply a required force to keep the cover 20 in the opened position.

The cover 20 comprises a circumferential airtight wall 25 to form, together with an upper wall 29 an airtight compartment 26. An opening is present at the side of the airtight compartment 26 opposite to the upper wall 29 of the cover 20, through which access is provided to the airtight compartment 26, when the cover 20 is in the opened position.

In the airtight compartment 26, a power socket unit 22 is mounted. The power socket unit 22 is at least partly arranged in the airtight compartment 26. The power socket unit 22 comprises a power socket to connect a plug of a charging cable. The airtight compartment 26 is capable of holding a volume of air inside, when the cover 20 is in the closed position. This volume of air prevents water from entering the airtight compartment 26. The interior of the airtight compartment 26 will therefore not come into contact with water and the power socket unit 22, that is arranged inside the airtight compartment 26, will not short circuit as a result of water entering.

As an indication, the plug 50 and charging cable 51 are shown. In Figure 2, it can be seen that when the cover 20 is in the closed position, the opening 13 is not fully covered by the cover 20 in order to allow passage of the charging cable 51 from the interior of the underground casing 10 to the outside. The cover 20 further comprises a reading device 37 in the top surface 21, as can be seen in Figure 2, through which communication with the underground power supply system 1 by for example Bluetooth or Near Field Communication (NFC) is possible. When a signal would be applied to the reading device 37, for example by means of a card or a mobile telephone, the underground power supply system 1 recognizes the user and allows the cover 20 to be moved to the opened position.

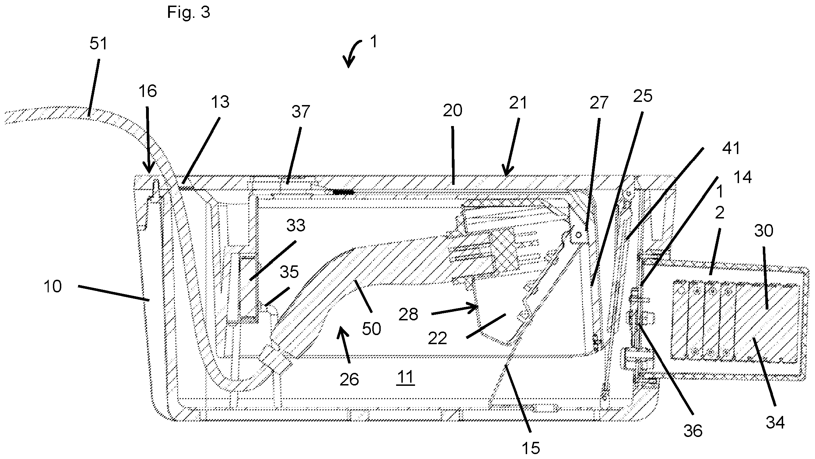

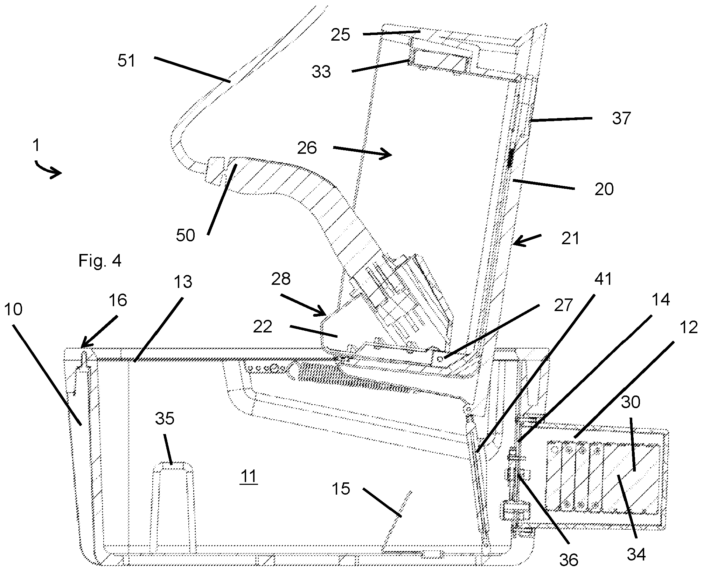

Figures 3 and 4 respectively show a section view of the underground power supply system 1 with the cover 20 in closed and opened position. The underground casing 10 of the underground power supply system 1 comprises two casing compartments 11, 12, which are separated by a removable wall element 14.

The first casing compartment 11 has an opening 13 in the top to provide access to the interior of the casing 10. Within the second casing compartment 12, the control unit 30 and the communication unit 34 are arranged. The second casing compartment 12 may, in other embodiments, also be arranged at other sides of the first casing compartment 11.

In the shown embodiment, a locking mechanism 33 is present to lock the cover 20 in the closed position with respect to the underground casing 10. The locking mechanism 33 is attached to cover 20. The locking mechanism 33 is configured to cooperate with a locking bracket 35 which is situated on the bottom of the first casing compartment 11. When the cover 20 moved into the closed position, the locking mechanism 33 locks into the locking bracket 35 to hold the cover 20 in the closed position.

The locking mechanism 33 will have two major functions: it will, first, prevent unauthorized persons to gain access to the interior part of the underground power supply system 1. Secondly, it will hold the cover 20 in the closed position, despite the spring 40 applying a biasing force to the cover 20. The locking mechanism 33 is connected to the control unit 30 and can be activated to release the locking engagement with the locking bracket 35 by a release signal from the control unit 33. The control unit may provide a release signal when a user has requested the opening of the cover 20 in order to connect a vehicle to the underground power supply system 1.

For example, the user may request opening of the cover 20 using a remote device, such as a mobile telephone, connected to the internet. In that case the control 30 unit will also have to be connected to the internet. The remote device may also be a remote control that directly communicates with the communication unit 34. As an alternative, the control unit 30 may receive the request from the reading device 37 that allows direct communication with a remote device, such as a card or mobile telephone.

In Figures 3 and 4, a water sensor 36 is arranged on the removable wall element 14. The water sensor 36 is provided to measure the water level in the first casing compartment 11. As a result of excessive rain or a high ground water level, water may accumulate inside the first casing compartment 11. This water level can be detected by the water sensor 36 and can be transmitted to the control unit 30, in order to provide information on the status of the underground power supply system 1.

In Figures 3 and 4, the airtight compartment 26 can be seen again. Within this airtight compartment 26, the power socket unit 22 is at least partly arranged. A tilting mechanism is arranged to rotate the power socket unit 22 between a position within the interior of the airtight compartment 26, as in Figure 4, and a position in which the power socket unit extends at least partly from the interior of the airtight compartment 26 as in Figure 3. It can be seen that the position of the power socket unit 22 with respect to the cover 20 will change as a function of the position of the cover 20 with respect to the casing 10. When the cover 20 is in the closed position, a rest 15 forces the power socket unit 22 in the interior of the airtight compartment 26. When the cover 20 is in the open position, as in Figure 3, the power socket unit 22 will, forced by gravitational forces, be rotated around hinge 27 to a position in which it at least partly extends from the interior of the airtight compartment 26.

In an alternative embodiment, the top surface 28 of the power socket unit 22 will be parallel to the top wall 16 of the casing 10 for optimal ergonomics for the user, when the plug 50 is being installed in the power socket unit 22.

The underground casing 1 and the cover 20 may be made from any suitable material such as metals, for example carbon and stainless steel or plastic materials.

When a user would like to charge his vehicle he may for example first locate the nearest underground power supply system 1 on a map on his mobile telephone. He will drive towards the nearest underground power supply system 1 and will park close to it.

To open the cover 20, he may send a release signal to the underground power supply system 1, for example by means of a mobile telephone. The underground power supply system 1 may release the locking mechanism 33 of the cover 20 from the casing 10 and the cover 20 will automatically be moved to the opened position by the spring 40. During this rotating movement of the cover 20, the power socket unit 22 will tilt at least partly out of the airtight compartment 26 in order to provide better access for the user to the power socket unit 22.

The user can then plug the plug 50, with the charging cable 51 attached into the power socket in the power socket unit 22. When the plug is placed in the power socket, the cover 20 can be moved to the closed position, whereby the power socket unit 22, with the plug 50 and charging cable 51 attached, will tilt back in the retracted position within the airtight compartment 26. A second sensor will validate whether the cover 20 is in the closed position. As soon as it is conformed that the cover 20 is in the closed position, the control unit 30 allows a current to flow to the power socket unit 22 and charging of the vehicle can start.

When the charging of the vehicle has stopped or when the user decides to leave again from the underground power supply system 1, he will send a release signal to the underground power supply system 1. The underground power supply system 1 will release the locking mechanism 33 of the cover 20 from the casing 10 and the cover 20 will automatically be moved to the opened position by the spring 40. The power socket unit 22 will tilt again at least partly out of the airtight compartment 26 in order to provide better access for the user to the power socket unit 22. The user is then able to remove the plug 50 from the power socket unit 22. After removal of the plug 50, the user will move the cover 20 to the closed position, after which the charging procedure has been finished.

In the case that the first casing compartment 11 is filled substantially with water, the water sensor 36 will return a signal to the control unit 30. Depending on the height of the water, the control unit 30 may decide that charging of a vehicle, by means of the underground power supply system 1 is not safe. The control unit 30 will therefore prevent the locking mechanism 33 from unlocking the cover 20, and the underground power supply system 1 cannot be used to charge a vehicle.

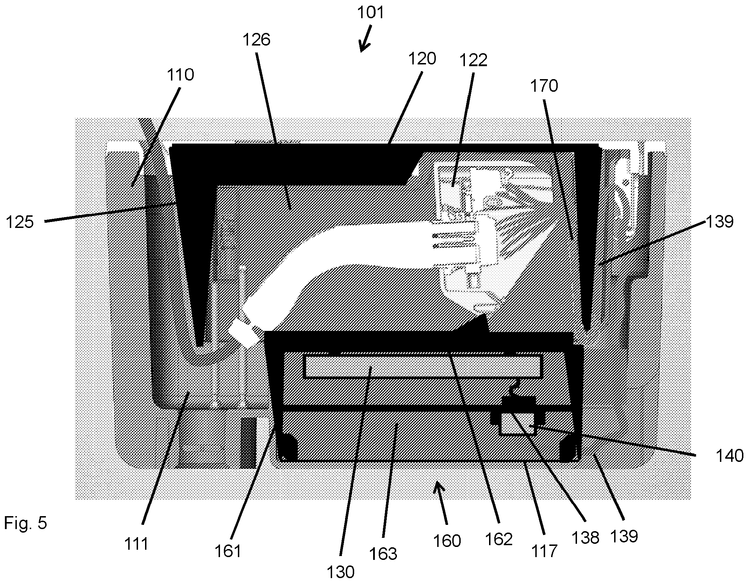

In figure 5, an alternative embodiment of the underground power supply system according to the invention is shown. The embodiment of the system 101 in figure 5 is substantially similar to that in figures 1 - 4, except for that it only comprises a single casing compartment 111.

The system 101 comprises a first airtight compartment 126, which is formed by a top wall formed by the cover 120 and the side walls 125, which are integrally formed with the cover 120. The power socket unit 122 is arranged at least partially in the first airtight compartment 126 and is rotatably mounted thereto.

The system 101 comprises a second airtight compartment 160, which is configured to be mounted to a bottom 117 of the casing 110. The second airtight compartment 160 comprises side walls 161 and a top wall 162, which together define an interior 163 of the second airtight compartment 160. The interior 163 can be accessed through an opening, defined by the side walls 161, which abuts, in operating condition of the system 101, the bottom 117 of the casing 110.

The second airtight compartment 160 is configured to hold a volume of air in its interior 163, to prevent water from flowing in. The control unit 130 is arranged in the interior 163 of the second airtight compartment 160 and is therefore, at least in the operating condition of the system 101, prevented from coming into contact with water.

The control unit 130 comprises at least one connector 138, in which the control unit 130 is configured to receive a plug 140. The control unit 130 is, in the operating condition, electrically connected to cables 139, by means of the connector 138 and the plug 140, to provide current to the power socket unit 122.

In the embodiment of the system 1, the cables 139 enter the interior 163 of the second airtight compartment 160 through a passage in one of the side walls 161 of the second airtight compartment 160. The passage is thereby arranged substantially lower than the control unit 130 to prevent the control unit 130 from coming into contact with water that might enter the second airtight compartment 160 through the passage.

The second airtight compartment 160 is formed as an exchangeable module that can easily be taken out of the casing compartment 111. This allows for easy repair and/or replacement of the control unit 130 and other electronic components arranged in the second airtight compartment 160. In order to make the second airtight compartment 160 exchangeable a snap-fit connection device is provided to mount the second airtight compartment 160 on the bottom wall of the casing compartment 111.

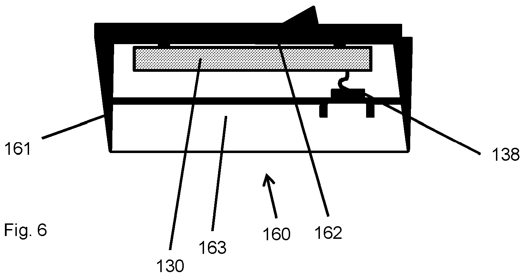

Figure 6 shows the exchangeable second airtight compartment 160 separately. When there is for example an electronic failure of the control unit, the second airtight compartment 160 can be completely taken out of the casing compartment 111 by releasing the snap-fit connection and pulling the plug 140 out of the connector 138. Thereafter, a new second airtight compartment 160 may be arranged in the casing compartment 111, by plugging plug 140 into connector 138 of the new second airtight compartment 160 and mounting the second airtight compartment 160 on the bottom wall using the snap-fit connection device.

The system 1 further comprises a connection piece 170, which is configured to guide at least one of the cables 139 into the interior of the first airtight compartment 126. The connection piece 170 has a shape that substantially mates to that of at least one of the side walls 125 of the first airtight compartment 126. The connection piece 170 is mounted to that one of the side walls 125 by means of a snap-fit connection. As a result, the at least one cable 139 is guided into the first airtight compartment 126 along the side wall 125.

The connection piece 170 ensures an air impermeable passage of at least one cable 139 from the exterior to the interior of the first airtight compartment 126. This prevents air leakage from the interior of the first airtight compartment 126 to the exterior. The at least one cable 139 may as well be a wiring harness, comprising multiple cables, and tightly surrounded by the connection piece 170, such that no air can permeate through the connection piece 170 and leak from the interior to the exterior of the first airtight compartment 126.

It is remarked that a similar connection piece may be used to guide the cables 139 into the second airtight compartment 160.

## Claims

1. An underground power supply system (1,101), in particular an underground vehicle charging station, comprising:
- a casing (10,110), to be arranged underground, comprising an opening (13) at the upper side,
- a power socket unit (22,122), wherein the power socket unit is movable between a retracted position, in which the power socket unit is arranged within the casing and an accessible position, in which the power socket unit is accessible for a user to connect a charging cable (51), and
- an actuating element to move the power socket unit between the retracted and accessible position,
- a cover (20,120) attached to the casing and rotatable with respect to the casing around an axis along a side of the opening between an opened and a closed position, wherein, in the closed position, the cover covers the opening of the casing at least partly and an inner surface of the cover faces an interior of the casing, and
- an airtight compartment (26,126,160) arranged at the inner surface of the cover, which is configured to rotate along with the cover and which has a second opening at a side of the airtight compartment opposite to the inner surface,
wherein the power socket unit is at least in the closed position of the cover arranged in the airtight compartment, to prevent the power socket unit from getting into contact with water, and wherein the power socket unit is accessible for the user when the cover is arranged in the opened position,
wherein the actuating element is configured to move the cover from the closed position to the opened position to move the power socket unit from the retracted to the accessible position, wherein the actuator element is a spring element (40), arranged to bias the cover to the opened position,
wherein the underground power supply system comprises a locking mechanism (33) configured to lock the cover in the closed position and to unlock the cover to allow the spring element to move the cover in the opened position, and wherein the underground power supply system comprises a control unit (30,130) configured to control the locking mechanism,
wherein the system comprises a sensor (36) that is configured to measure a water level in the casing and to communicate this signal to the control unit, and
wherein the control unit is configured to prevent the power socket unit to be moved between the retracted position and the accessible position, when the water level sensor in the casing measures a water level in the casing that exceeds a predetermined maximum level.

2. The underground power supply system according to claim 1, wherein the power socket unit is arranged on a tilting mechanism mounted in the airtight compartment to allow the power socket unit to be moved between the charging position, in which the power socket unit at least partly extends out of the airtight compartment, and the retracted position, in which the power socket unit is arranged in the airtight compartment.

3. The underground power supply system according to claim 1 or 2, wherein the locking mechanism is configured to unlock the cover upon receipt of a release signal from the control unit, such that the actuation element will automatically move the cover to the opened position.

4. The underground power supply system according to any of the claims 1-3, wherein the control unit is configured to send a signal to the locking mechanism to lock the cover when the cover is moved into the closed position.

5. The underground power supply system according to any of the preceding claims, wherein the underground power supply system is an underground vehicle charging station, comprising a control unit configured to monitor and control the electric current towards the power socket unit, wherein the control unit is preferably configured to only charge the vehicle when the cover is in the closed position.

6. The underground power supply system according to any of the preceding claims, wherein the underground power supply system comprises two or more casing compartments (11,12,111).

7. The underground power supply system according to any of the preceding claims, wherein the underground power supply system comprises a communication device (34) to communicate with an external communication device.

8. The underground power supply system according to any of the preceding claims, wherein the walls (25,29) of the airtight compartment are free of holes, which define a passage between an interior and an exterior of the compartment

9. The underground power supply system according to the preceding claim, wherein the system comprises a connection piece (170), through which cables (139) enter the interior of the airtight compartment from an exterior of the airtight compartment, wherein the connection piece is non-permeable for air, and wherein the connection piece optionally has a shape that mates with a side wall of the compartment, such that the connection piece can be releasably connected to the side wall by a snap-fit connection.

10. A method to provide an electric current to charge an electric vehicle, using an underground power supply system as described in the previous claims, comprising the steps of:
sending a loading request to the underground power supply system,
moving, by the actuation element, the cover to the opened position and exposing the power socket unit from an underground casing to the user,
attaching a charging cable to the power socket unit and the vehicle,
charging the vehicle by delivering an electric current to the power socket unit, and
removing the charging cable from the power socket unit and the vehicle when the underground power supply system has finished charging,
wherein the control unit prevents the power socket unit to be moved between the retracted position and the accessible position, when a water level sensor in the casing measures a water level in the casing that exceeds a predetermined maximum level.

11. The method to provide an electric current to charge an electric vehicle according to claim 10, wherein during moving the cover to the opened position, the power socket unit moves from the retracted position, in which the power socket unit is arranged in the airtight compartment to the charging position, in which the power socket unit at least partly extends out of the airtight compartment, thereby allowing better access to the power socket unit by the user.

12. The method to provide an electric current to charge an electric vehicle according to claim 10 or 11, wherein the method comprises the step of sending a request, by the user, to the underground power supply system to unlock the cover in order to allow opening of the cover and removal of the charging cable from the power socket unit.

13. The method to provide an electric current to charge an electric vehicle according to any of the claims 10-12, comprising, after the step of removing the charging cable from the power socket unit, moving, by the user, the cover into the closed position, wherein closure of the cover is preferably confirmed by a control unit.

14. The method to provide an electric current to charge an electric vehicle according to claim 10-13, wherein the user, prior to sending the request for loading to the system, can display a map of the locations of all underground power supply systems on the remote device.

## Patentansprüche

1. Unterirdisches Stromversorgungssystem (1, 101), insbesondere unterirdische Fahrzeugladestation, umfassend:
- ein unterirdisch anzuordnendes Gehäuse (10, 110), das an der Oberseite eine Öffnung (13) umfasst,
- eine Steckdoseneinheit (22, 122), wobei die Steckdoseneinheit zwischen einer zurückgezogenen Position, in der die Steckdoseneinheit innerhalb des Gehäuses angeordnet ist, und einer zugänglichen Position, in der die Steckdoseneinheit für einen Benutzer zum Anschließen eines Ladekabels (51) zugänglich ist, bewegbar ist, und
- ein Betätigungselement zum Bewegen der Steckdoseneinheit zwischen der zurückgezogenen und der zugänglichen Position,
- eine Abdeckung (20, 120), die an dem Gehäuse angebracht und in Bezug auf das Gehäuse um eine Achse entlang einer Seite der Öffnung zwischen einer geöffneten und einer geschlossenen Position drehbar ist, wobei die Abdeckung in der geschlossenen Position die Öffnung des Gehäuses mindestens teilweise abdeckt und eine Innenfläche der Abdeckung einem Inneren des Gehäuses zugewandt ist, und
- ein an der Innenfläche der Abdeckung angeordnetes luftdichtes Fach (26, 126, 160), das dazu ausgelegt ist, sich zusammen mit der Abdeckung zu drehen, und das eine zweite Öffnung an einer der Innenfläche gegenüberliegenden Seite des luftdichten Fachs aufweist,
wobei sich die Steckdoseneinheit mindestens in der geschlossenen Position der in dem luftdichten Fach angeordneten Abdeckung befindet, um zu verhindern, dass die Steckdoseneinheit mit Wasser in Kontakt kommt, und wobei die Steckdoseneinheit für den Benutzer zugänglich ist, wenn die Abdeckung in der geöffneten Position angeordnet ist,
wobei das Betätigungselement dazu ausgelegt ist, die Abdeckung aus der geschlossenen Position in die geöffnete Position zu bewegen, um die Steckdoseneinheit aus der zurückgezogenen in die zugängliche Position zu bewegen, wobei das Betätigungselement ein Federelement (40) ist, das dazu angeordnet ist, die Abdeckung in die geöffnete Position vorzuspannen,
wobei das unterirdische Stromversorgungssystem einen Verriegelungsmechanismus (33) umfasst, der dazu ausgelegt ist, die Abdeckung in der geschlossenen Position zu verriegeln und die Abdeckung zu entriegeln, damit das Federelement die Abdeckung in die geöffnete Position bewegen kann, und wobei das unterirdische Stromversorgungssystem eine Steuereinheit (30, 130) umfasst, die dazu ausgelegt ist, den Verriegelungsmechanismus zu steuern,
wobei das System einen Sensor (36) umfasst, der dazu ausgelegt ist, einen Wasserstand im Gehäuse zu messen und dieses Signal an die Steuereinheit zu übermitteln, und
wobei die Steuereinheit dazu ausgelegt ist, zu verhindern, dass die Steckdoseneinheit zwischen der zurückgezogenen Position und der zugänglichen Position bewegt wird, wenn der Wasserstandssensor im Gehäuse einen Wasserstand im Gehäuse misst, der einen vorbestimmten Höchststand überschreitet.

2. Unterirdisches Stromversorgungssystem gemäß Anspruch 1, wobei die Steckdoseneinheit auf einem Kippmechanismus angeordnet ist, der in dem luftdichten Fach angebracht ist, um die Bewegung der Steckdoseneinheit zwischen der Ladeposition, in der die Steckdoseneinheit mindestens teilweise aus dem luftdichten Fach herausragt, und der zurückgezogenen Position, in der die Steckdoseneinheit in dem luftdichten Fach angeordnet ist, zu ermöglichen.

3. Unterirdisches Stromversorgungssystem gemäß Anspruch 1 oder 2, wobei der Verriegelungsmechanismus dazu ausgelegt ist, die Abdeckung bei Empfang eines Freigabesignals aus der Steuereinheit zu entriegeln, sodass das Betätigungselement die Abdeckung automatisch in die geöffnete Position bewegt.

4. Unterirdisches Stromversorgungssystem gemäß einem der Ansprüche 1-3, wobei die Steuereinheit dazu ausgelegt ist, ein Signal an den Verriegelungsmechanismus zu senden, um die Abdeckung zu verriegeln, nachdem die Abdeckung in die geschlossene Position bewegt wurde.

5. Unterirdisches Stromversorgungssystem gemäß einem der vorhergehenden Ansprüche, wobei das unterirdische Stromversorgungssystem eine unterirdische Fahrzeugladestation ist, die eine Steuereinheit umfasst, die dazu ausgelegt ist, den elektrischen Strom zur Steckdoseneinheit zu überwachen und zu steuern, wobei die Steuereinheit vorzugsweise dazu ausgelegt ist, das Fahrzeug nur zu laden, wenn sich die Abdeckung in der geschlossenen Position befindet.

6. Unterirdisches Stromversorgungssystem gemäß einem der vorhergehenden Ansprüche, wobei das unterirdische Stromversorgungssystem zwei oder mehr Gehäusefächer (11, 12, 111) umfasst.

7. Unterirdisches Stromversorgungssystem gemäß einem der vorhergehenden Ansprüche, wobei das unterirdische Stromversorgungssystem eine Kommunikationsvorrichtung (34) zur Kommunikation mit einer externen Kommunikationsvorrichtung umfasst.

8. Unterirdisches Stromversorgungssystem gemäß einem der vorhergehenden Ansprüche, wobei die Wände (25, 29) des luftdichten Fachs frei von Löchern sind, die einen Durchgang zwischen einem Inneren und einem Äußeren des Fachs definieren.

9. Unterirdisches Stromversorgungssystem gemäß dem vorhergehenden Anspruch, wobei das System ein Verbindungsstück (170) umfasst, durch das Kabel (139) von einem Äußeren des luftdichten Fachs in das Innere des luftdichten Fachs eintreten, wobei das Verbindungsstück nicht luftdurchlässig ist und wobei das Verbindungsstück optional eine Form aufweist, die mit einer Seitenwand des Fachs zusammenpasst, sodass das Verbindungsstück durch eine Einrastverbindung lösbar mit der Seitenwand verbunden werden kann.

10. Verfahren zum Bereitstellen eines elektrischen Stroms zum Laden eines Elektrofahrzeugs unter Verwendung eines unterirdischen Stromversorgungssystems wie in den vorhergehenden Ansprüchen beschrieben, umfassend die Schritte:
Senden einer Ladeaufforderung an das unterirdische Stromversorgungssystem,
Bewegen der Abdeckung durch das Betätigungselement in die geöffnete Position und Freilegen der Steckdoseneinheit aus einem unterirdischen Gehäuse für den Benutzer,
Anbringen eines Ladekabels an der Steckdoseneinheit und am Fahrzeug,
Laden des Fahrzeugs durch Zuführen eines elektrischen Stroms zur Steckdoseneinheit, und
Entfernen des Ladekabels von der Steckdoseneinheit und dem Fahrzeug, wenn das unterirdische Stromversorgungssystem den Ladevorgang beendet hat,
wobei die Steuereinheit verhindert, dass die Steckdoseneinheit zwischen der zurückgezogenen Position und der zugänglichen Position bewegt wird, wenn ein Wasserstandssensor im Gehäuse einen Wasserstand im Gehäuse misst, der einen vorbestimmten Höchststand überschreitet.

11. Verfahren zum Bereitstellen eines elektrischen Stroms zum Laden eines Elektrofahrzeugs gemäß Anspruch 10, wobei sich die Steckdoseneinheit während des Bewegens der Abdeckung in die geöffnete Position aus der zurückgezogenen Position, in der die Steckdoseneinheit in dem luftdichten Fach angeordnet ist, in die Ladeposition bewegt, in der die Steckdoseneinheit mindestens teilweise aus dem luftdichten Fach herausragt, wodurch ein besserer Zugang zur Steckdoseneinheit durch den Benutzer ermöglicht wird.

12. Verfahren zum Bereitstellen eines elektrischen Stroms zum Laden eines Elektrofahrzeugs gemäß Anspruch 10 oder 11, wobei das Verfahren den Schritt des Sendens einer Aufforderung durch den Benutzer an das unterirdische Stromversorgungssystem umfasst, die Abdeckung zu entriegeln, um das Öffnen der Abdeckung und das Entfernen des Ladekabels aus der Steckdoseneinheit zu ermöglichen.

13. Verfahren zum Bereitstellen eines elektrischen Stroms zum Laden eines Elektrofahrzeugs gemäß einem der Ansprüche 10-12, umfassend nach dem Schritt des Entfernens des Ladekabels aus der Steckdoseneinheit das Bewegen der Abdeckung durch den Benutzer in die geschlossene Position, wobei das Schließen der Abdeckung vorzugsweise durch eine Steuereinheit bestätigt wird.

14. Verfahren zum Bereitstellen eines elektrischen Stroms zum Laden eines Elektrofahrzeugs gemäß Anspruch 10-13, wobei der Benutzer vor dem Senden der Ladeaufforderung an das System einen Lageplan mit den Standorten aller unterirdischen Stromversorgungssysteme auf der Fernvorrichtung anzeigen kann.

## Revendications

1. Système d'alimentation électrique souterrain (1, 101), en particulier une borne de charge de véhicule souterraine, comprenant :
- un boîtier (10, 110), destiné à être agencé sous terre, comprenant une ouverture (13) au niveau du côté supérieur,
- une unité de prise de courant (22, 122), l'unité de prise de courant pouvant être déplacée entre une position rétractée, dans laquelle l'unité de prise de courant est agencée à l'intérieur du boîtier et une position accessible, dans laquelle l'unité de prise de courant est accessible pour un utilisateur pour connecter un câble de charge (51), et
- un élément d'actionnement pour déplacer l'unité de prise de courant entre la position rétractée et accessible,
- un couvercle (20, 120) attaché au boîtier et pouvant tourner par rapport au boîtier autour d'un axe le long d'un côté de l'ouverture entre une position ouverte et fermée, dans la position fermée, le couvercle recouvrant l'ouverture du boîtier au moins partiellement et une surface interne du couvercle faisant face à un intérieur du boîtier, et
- un compartiment étanche à l'air (26, 126, 160) agencé au niveau de la surface interne du couvercle, qui est configuré pour tourner conjointement avec le couvercle et qui a une deuxième ouverture au niveau d'un côté du compartiment étanche à l'air opposé à la surface interne,
l'unité de prise de courant étant au moins dans la position fermée du couvercle agencée dans le compartiment étanche à l'air, pour empêcher l'unité de prise de courant d'entrer en contact avec l'eau, et l'unité de prise de courant étant accessible pour l'utilisateur lorsque le couvercle est agencé dans la position ouverte,
l'élément d'actionnement étant configuré pour déplacer le couvercle de la position fermée à la position ouverte afin de déplacer l'unité de prise de courant de la position rétractée à la position accessible, l'élément actionneur étant un élément ressort (40), agencé pour solliciter le couvercle vers la position ouverte,
le système d'alimentation électrique souterrain comprenant un mécanisme de verrouillage (33) configuré pour verrouiller le couvercle dans la position fermée et pour déverrouiller le couvercle afin de permettre à l'élément ressort de déplacer le couvercle dans la position ouverte, et le système d'alimentation électrique souterrain comprenant une unité de commande (30, 130) configurée pour commander le mécanisme de verrouillage,
le système comprenant un capteur (36) qui est configuré pour mesurer un niveau d'eau dans le boîtier et pour communiquer ce signal à l'unité de commande, et
l'unité de commande étant configurée pour empêcher l'unité de prise de courant d'être déplacée entre la position rétractée et la position accessible, lorsque le capteur de niveau d'eau dans le boîtier mesure un niveau d'eau dans le boîtier qui dépasse un niveau maximal prédéterminé.

2. Système d'alimentation électrique souterrain selon la revendication 1, où l'unité de prise de courant est agencée sur un mécanisme d'inclinaison monté dans le compartiment étanche à l'air pour permettre à l'unité de prise de courant d'être déplacée entre la position de charge, dans laquelle l'unité de prise de courant s'étend au moins partiellement hors du compartiment étanche à l'air, et la position rétractée, dans laquelle l'unité de prise de courant est agencée dans le compartiment étanche à l'air.

3. Système d'alimentation électrique souterrain selon la revendication 1 ou la revendication 2, où le mécanisme de verrouillage est configuré pour déverrouiller le couvercle à réception d'un signal de libération provenant de l'unité de commande, de telle sorte que l'élément d'actionnement déplace automatiquement le couvercle vers la position ouverte.

4. Système d'alimentation électrique souterrain selon l'une quelconque des revendications 1 à 3, où l'unité de commande est configurée pour envoyer un signal au mécanisme de verrouillage afin de verrouiller le couvercle lorsque le couvercle est déplacé dans la position fermée.

5. Système d'alimentation électrique souterrain selon l'une quelconque des revendications précédentes, où le système d'alimentation électrique souterrain est une borne de charge de véhicule souterraine, comprenant une unité de commande configurée pour surveiller et commander le courant électrique vers l'unité de prise de courant, l'unité de commande étant préférablement configurée pour charger le véhicule uniquement lorsque le couvercle est dans la position fermée.

6. Système d'alimentation électrique souterrain selon l'une quelconque des revendications précédentes, où le système d'alimentation électrique souterrain comprend deux compartiments de boîtier ou plus (11, 12, 111).

7. Système d'alimentation électrique souterrain selon l'une quelconque des revendications précédentes, où le système d'alimentation électrique souterrain comprend un dispositif de communication (34) pour communiquer avec un dispositif de communication externe.

8. Système d'alimentation électrique souterrain selon l'une quelconque des revendications précédentes, où les parois (25, 29) du compartiment étanche à l'air sont exemptes de trous, qui définissent un passage entre un intérieur et un extérieur du compartiment.

9. Système d'alimentation électrique souterrain selon la revendication précédente, où le système comprend une pièce de connexion (170), à travers laquelle des câbles (139) entrent à l'intérieur du compartiment étanche à l'air à partir d'un extérieur du compartiment étanche à l'air, la pièce de connexion étant non perméable à l'air, et la pièce de connexion ayant facultativement une forme qui s'accouple avec une paroi latérale du compartiment, de telle sorte que la pièce de connexion puisse être connectée de façon à pouvoir être libérée à la paroi latérale par une connexion par encliquetage.

10. Procédé pour fournir un courant électrique pour charger un véhicule électrique, à l'aide d'un système d'alimentation électrique souterrain tel que décrit dans les revendications précédentes, comprenant les étapes consistant à :
envoyer une demande de chargement au système d'alimentation électrique souterrain,
déplacer, par l'élément d'actionnement, le couvercle vers la position ouverte et exposer l'unité de prise électrique d'un boîtier souterrain à l'utilisateur,
attacher un câble de charge à l'unité de prise de courant et au véhicule,
charger le véhicule en amenant un courant électrique à l'unité de prise de courant, et
retirer le câble de charge de l'unité de prise de courant et du véhicule lorsque le système d'alimentation électrique souterrain a terminé la charge,
l'unité de commande empêchant l'unité de prise de courant d'être déplacée entre la position rétractée et la position accessible, lorsqu'un capteur de niveau d'eau dans le boîtier mesure un niveau d'eau dans le boîtier qui dépasse un niveau maximal prédéterminé.

11. Procédé pour fournir un courant électrique afin de charger un véhicule électrique selon la revendication 10, où pendant le déplacement du couvercle vers la position ouverte, l'unité de prise de courant se déplace de la position rétractée, dans laquelle l'unité de prise de courant est agencée dans le compartiment étanche à l'air vers la position de charge, dans laquelle l'unité de prise de courant s'étend au moins partiellement hors du compartiment étanche à l'air, permettant ainsi un meilleur accès à l'unité de prise de courant par l'utilisateur.

12. Procédé pour fournir un courant électrique pour charger un véhicule électrique selon la revendication 10 ou la revendication 11, le procédé comprenant l'étape consistant à envoyer une demande, par l'utilisateur, au système d'alimentation électrique souterrain pour déverrouiller le couvercle afin de permettre l'ouverture du couvercle et le retrait du câble de charge de l'unité de prise électrique.

13. Procédé pour fournir un courant électrique afin de charger un véhicule électrique selon l'une quelconque des revendications 10 à 12, comprenant, après l'étape consistant à retirer le câble de charge de l'unité de prise de courant, le déplacement, par l'utilisateur, du couvercle dans la position fermée, la fermeture du couvercle étant préférablement confirmée par une unité de commande.

14. Procédé pour fournir un courant électrique pour charger un véhicule électrique selon la revendication 10 à 13, où l'utilisateur, avant d'envoyer la demande de chargement au système, peut afficher une carte des emplacements de tous les systèmes d'alimentation électrique souterrains sur le dispositif distant.
